# EUROPEAN PATENT SPECIFICATION

(11) **EP 2 895 366 B1**
(45) Date of publication and mention of the grant of the patent: **10.05.2017**
(21) Application number: 12884669.8
(22) Date of filing: 13.09.2012
(51) Int. Cl.: B60T 15/54, B60T 15/02, B60T 7/08, B61H 13/02, B61H 13/34

(54) **BRAKE RELEASE DEVICE FOR A BRAKING ARRANGEMENT**
BREMSAUSLÖSEVORRICHTUNG FÜR EINE BREMSANORDNUNG
DISPOSITIF DE RELÂCHEMENT DE FREIN POUR SYSTÈME DE FREINAGE

(43) Date of publication of application: 22.07.2015
(73) Proprietor: Bombardier Transportation GmbH, 10785 Berlin (DE)
(72) Inventor: ASLANIAN, George, Marlbank, Ontario K0K 2L0 (CA); KING, Andrew, Kingston, Ontario K7L 4C8 (CA)
(74) Representative: Patentanwälte Bressel und Partner mbB
(86) International application number: PCT/CA2012/000848
(87) International publication number: WO 2014/040161

(56) References cited:
- WO-A1-81/02274
- WO-A1-2009/016167
- GB-A- 2 112 481
- US-A- 4 254 845
- US-A- 4 813 518
- US-A1- 2002 167 219
- US-A1- 2007 176 485
- US-A1- 2009 160 246
- US-A1- 2010 127 560
- US-B2- 7 914 084

## Description

### Field of the invention

The invention relates to a brake release device for a braking arrangement. More specifically, the invention relates to a brake release device (e.g., comprising a hand pump) which permits the control of a braking arrangement.A device of this kind is disclosed in the WO 2009/016167 A1.

### Background

Rail transportation vehicles such as monorails employ hydraulically controlled brake systems. Such brake systems typically include a braking arrangement in fluid communication with a brake release device including at least one of a hydraulic brake control unit (HBCU) and a hand pump. During normal operation (when the monorail platform is electrically powered), braking forces from the brake calipers can be relieved via the HBCU. However, in the event of a loss of power to the monorail platform (or if it is required to perform maintenance on the braking arrangement), the system allows for the release of braking forces via the hand pump.

For example, during operation of the hand pump, fluid from a reservoir is pumped into brake calipers to relieve force against the brake discs. However, a problem may arise when it is necessary to reapply brake forces to the calipers by relieving the hydraulic pressure. In order to permit such a relief of pressure, prior systems use a combination of valves which must be operated in a specific sequence. If this sequence is not followed, pressurized fluid may undesirably return to the HBCU as opposed to being "dumped" in the fluid reservoir. This can cause significant damage to the HBCU.

Hence, a deficiency with prior brake release devices exists in that the use of multiple valves to control fluid flow between the braking arrangement and either of the HBCU and the hand pump may cause damage to the system.

There is therefore a need for a brake release device which allows relief of braking forces generated by brake calipers in a more foolproof manner to avoid inducing damage to the braking arrangement.

### Summary of the invention

In accordance with an aspect of the invention, there is provided a brake release device for a braking arrangement. The braking arrangement includes friction pads, a friction surface and a first fluid path to convey fluid for controlling the application of the friction pads against the friction surface. The brake release device comprises a second fluid path to convey fluid for releasing the friction pads from the friction surface. The brake release device also comprises a selector valve coupled with the first and second fluid paths. The selector valve is capable to selectively acquire a first mode, a second mode and an intermediate mode. The first mode establishes fluid communication between the first fluid path and the braking arrangement. The second mode establishes fluid communication between the second fluid path and the braking arrangement. The selector valve is movable from the first mode to the second mode via the intermediate mode in which pressurized fluid in the first fluid path is relieved before entering the second mode.

In accordance with another aspect of the invention, there is provided a brake release device for a braking arrangement. The braking arrangement includes friction pads, a friction surface and a first fluid path to convey fluid for controlling the application of the friction pads against the friction surface. The brake release device comprises a second fluid path to convey fluid for releasing the friction pads from the friction surface. The brake release device also comprises a selector valve coupled with the first and second fluid paths. The selector valve is capable to selectively acquire a first mode and a second mode. The first mode establishes fluid communication between the first fluid path and the braking arrangement. The second mode establishes fluid communication between the second fluid path and the braking arrangement. The brake release device also comprises a pressure responsive interlock which controls switching between the first mode and the second mode when pressure in the second fluid path is above a threshold.

In accordance with yet another aspect of the invention, there is provided a brake release device for a braking arrangement including friction pads and a friction surface. The brake release device comprises a first fluid path and a second fluid path to convey fluid for releasing the friction pads from the friction surface. The brake release device also comprises a third fluid path to convey fluid for applying the friction pads to the friction surface. The brake release device also comprises a selector valve coupled with the first, second and third fluid paths. The selector valve is capable to selectively acquire a first mode, a second mode and an intermediate mode. The first mode establishes fluid communication between the first fluid path and the braking arrangement. The second mode establishes fluid communication between the second fluid path and the braking arrangement. The intermediate mode establishes fluid communication between the third fluid path and the braking arrangement. Pressure in the third fluid path is relieved before entering either of the first or second modes.

### Brief description of the drawings

A detailed description of embodiments of the invention is provided hereinbelow with reference to the following drawings, in which:
Figure 1 is a perspective view of an example of a brake release device in accordance with an embodiment of the invention;
Figure 2A is a diagram showing a fluid circuit when the brake release device is in pressure dump mode;
Figure 2B is a front view of the brake release device in pressure dump mode;
Figure 3A is a diagram showing a fluid circuit when the brake release device is in hand pump mode;
Figure 3B is a front view of the brake release device in hand pump mode;
Figure 4A is a diagram showing a fluid circuit when the brake release device is in HBCU mode;
Figure 4B is a front view of the brake release device in HBCU mode; and
Figures 5A to 5D show an example of an interlocking system in accordance with an embodiment of the present invention.

In the drawings, embodiments of the invention are illustrated by way of example. It is to be expressly understood that the description and drawings are only for purposes of illustration and as an aid to understanding, and are not intended to be a definition of the limits of the invention.

### Detailed description of embodiments

To facilitate the description, any reference numeral designating an element in one figure will designate the same element if used in any other figures. In describing the embodiments, specific terminology is resorted to for the sake of clarity but the invention is not intended to be limited to the specific terms so selected, and it is understood that each specific term comprises all equivalents.

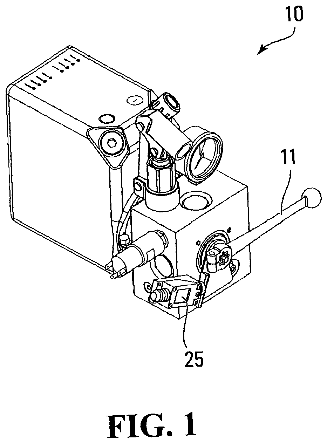

With reference to Figures 1 to 4B, there is shown a brake system 9 comprising a brake release device 10 in accordance with an embodiment of the invention. The brake release device 10 comprises a selector valve 11 capable of selectively acquiring different modes. In this example, the selector valve 11 may be actuated from one mode to another through a rotational motion. More specifically, the selector valve 11 of the brake release device 10 is capable of acquiring different modes of operation for controlling the application of brakes of a braking arrangement 12. In this embodiment, the selector valve 11 of the brake release device 10 is capable of acquiring a hand pump mode, a pressure dump (release) mode and a hydraulic brake control unit (HBCU) mode, as will be described in further detail below.

In this embodiment, the brake system 9 comprises a hand pump assembly 14 and a hydraulic brake control unit (HBCU) 16 for pressurization and/or depressurization of caliper pistons 20 of the braking arrangement 12. The pressurization means are not to be limited to those explicitly depicted herein and other fluid pressure control mechanisms can be employed to provide for the pressurization and/or depressurization of the caliper pistons 20 of the braking arrangement 12 in other embodiments. For example, the hand pump assembly 14 may be replaced with an electrically operated pump which is connected to a power source alternative to that which operates the HBCU 16 under normal operating conditions. In addition, many different types of pumps may be used for the purpose of supplying pressurized fluid to the caliper pistons 20. For instance, the pump employed may be a lobe pump, a scroll pump, a screw pump, etc.

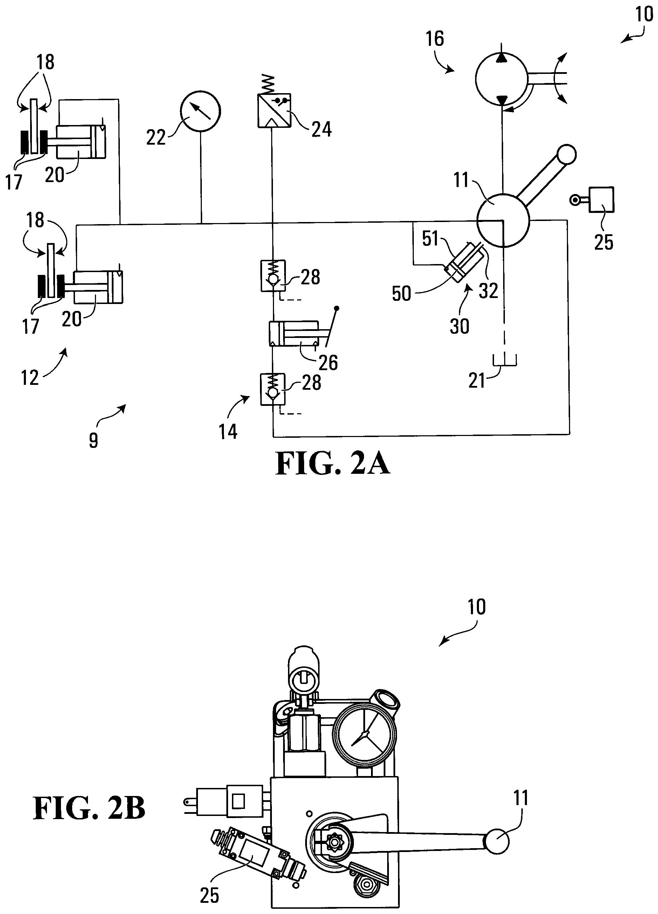

With reference to Figures 2A, 3A and 4A, several fluid circuits are shown corresponding to the possible modes of the brake release device 10.

The fluid circuits show the caliper pistons 20 of the braking arrangement 12. The caliper pistons 20 drive friction pads 17 that bear against a friction surface 18 of the braking arrangement 12. As such, when the friction pads 17 are applied against the friction surface 18 of the braking arrangement 12, a braking force is induced. On the other hand, when the friction surface 18 is out of contact with the friction pads 17, the braking force is removed. Thus, control of the braking arrangement 12 is rendered possible by controlling the level of pressurization of the caliper pistons 20. The caliper pistons 20 may be pressurized via either of the hand pump assembly 14 or the HBCU 16, as will be described in further detail below.

In addition, the brake system 9 also includes a fluid reservoir 21 in fluid communication with the braking arrangement 12 and the hand pump assembly 14, therefore permitting the pressurization or depressurization of the caliper pistons 20 of the braking arrangement 12 depending on the position of the selector valve 11.

Furthermore, the brake system 9 may also include additional elements for monitoring and responding to conditions of the fluid circuits. For example, there is shown a pressure gage 22 which permits the measurement of pressure in the caliper pistons 20 of the braking arrangement 12. In addition, there is also shown a pressure switch 24 which may be employed to make electrical contact with an electrical circuit when a set pressure has been reached, therefore permitting an external system to react in accordance with the state of the fluid circuit. The brake system 9 may also include a limit switch 25 to be operated when the selector valve 11 is in the HBCU mode. The brake system 9 may also comprise an interlock 30 for preventing switching between operational modes under certain conditions as will be described in further detail below.

With reference to Figure 2A, when the selector valve 11 of the brake release device 10 is in pressure dump mode, pressure in the caliper pistons 20 of the braking arrangement 12 is released. In the embodiment shown, the establishment of fluid communication between the braking arrangement 12 and the fluid reservoir 21 allows for the release of pressure in the caliper pistons 20 as pressurized fluid will flow from the caliper pistons 20 (high pressure) to the fluid reservoir 21 (low pressure), thus allowing the friction pads 17 to resume contact with the friction surface 18.

In addition, the brake system 9 and its brake release device 10 allows for fluid communication between alternative fluid paths and the braking arrangement 12 to convey fluid for releasing the friction pads 17 from the friction surface 18 as depicted in the hand pump mode and the HBCU mode described below.

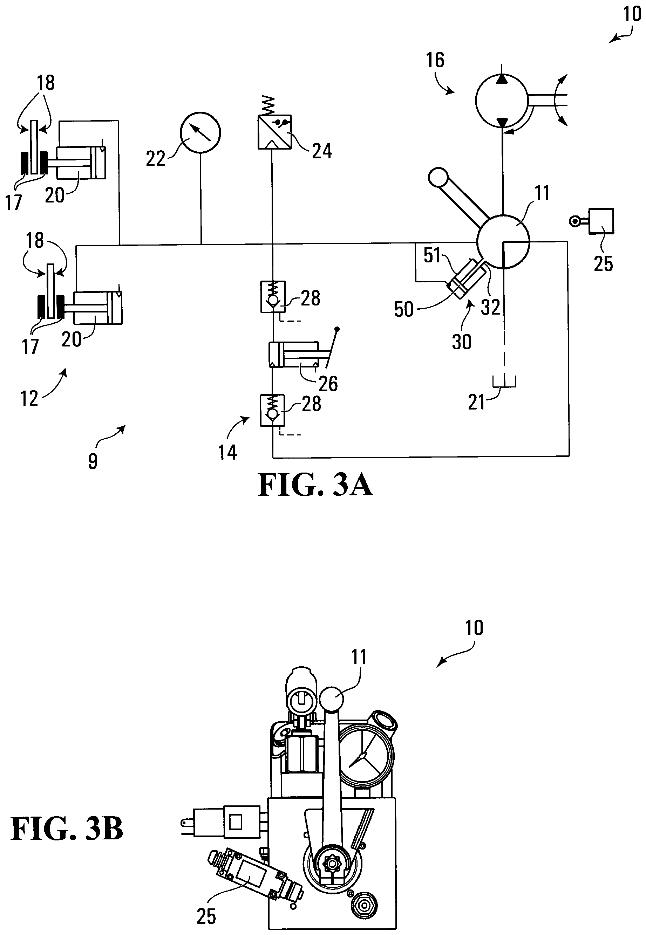

When the selector valve 11 of the brake release device 10 is in hand pump mode, as depicted in Figure 3A, the release of the friction pads 17 from the friction surface 18 of the braking arrangement 12 is accomplished via pressurization of the caliper pistons 20 by the hand pump assembly 14. In hand pump mode, the selector valve 11 permits fluid communication between the fluid reservoir 21, the hand pump assembly 14 and the braking arrangement 12. More specifically, fluid is permitted to flow from the fluid reservoir 21 towards the braking arrangement 12 by actuation of the hand pump assembly 14. In some embodiments, the hand pump assembly 14 may comprise a piston pump 26 and at least one check valve 28 for controlling the direction of fluid flow when the piston pump 26 is actuated. The one way check valves 28 will permit fluid flow in a particular direction while preventing fluid flow in the opposite direction. For example, the check valves 28 may be ball check valves biased in a particular direction such as to permit fluid flow towards the caliper pistons 20 of the braking arrangement 12 and to prevent fluid from flowing back towards the fluid reservoir 21.

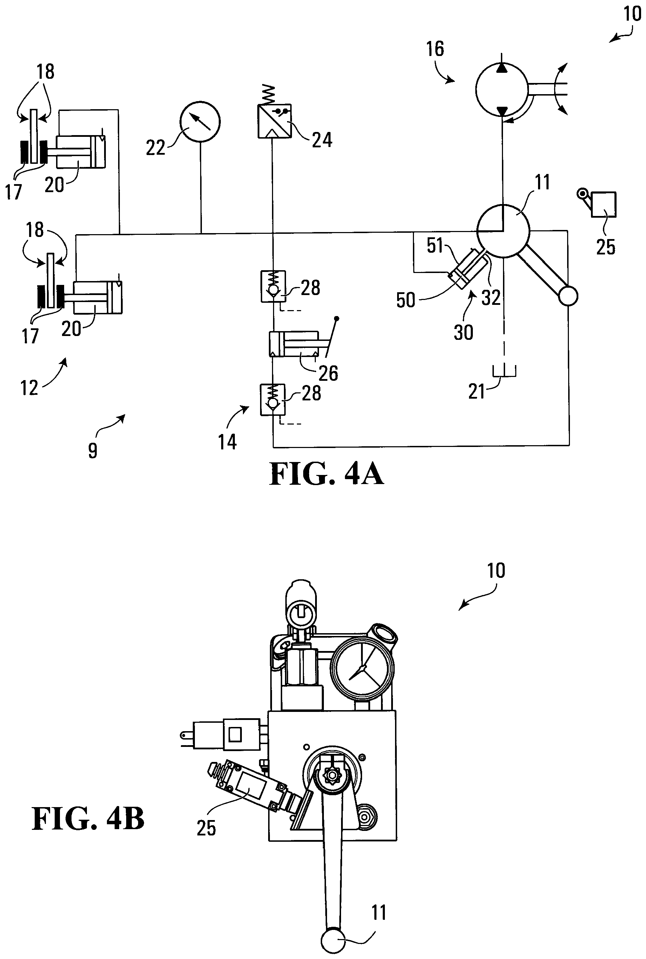

When the selector valve 11 of the brake release device 10 is in HBCU mode, as depicted in Figure 4A, the friction pads 17 can be released from the friction surface 18 of the braking arrangement 12 by pressurization of the caliper pistons 20 via a fluid pressure control mechanism other than the hand pump assembly 14 (such as in this case, the HBCU 16). In HBCU mode, the selector valve 11 permits fluid communication between the HBCU 16 and the braking arrangement 12. In this mode, pressurized fluid may flow from the HBCU 16 towards the braking arrangement 12. In addition, fluid is not permitted to flow from either of the fluid reservoir 21 or the hand pump assembly 14 towards the HBCU 16. More specifically, while the HBCU 16 is in fluid communication with the braking arrangement 12, the selector valve 11 prevents fluid communication between the HBCU 16 and the fluid reservoir 21. In HBCU mode, the selector valve 11 also prevents fluid communication between the hand pump assembly 14 and the HBCU 16.

As such, the implementation of a multi-position single selector valve 11 overcomes the problem of fluid returning to the HBCU 16 and therefore avoids inducing damage through incorrect control of a multiple valve system, thereby providing a safer method of changing between modes. Furthermore, as the pressure dump mode allows for the relief of pressurized fluid in the fluid lines, cross-contamination between the fluid sources is also avoided.

The embodiment of Figures 4A and 4B show the limit switch 25 in an activated state in contrast to Figures 2A through 3B in which the limit switch 25 is in a deactivated state. In the embodiment shown, the limit switch 25 is used to electrically identify the HBCU mode position of the selector valve 11. Other embodiments may be contemplated wherein the limit switch 25 achieves an activated state in any of the other modes discussed herein. In addition, some embodiments may also employ a limit switch 25 which achieves an activated state in more than one mode.

Thus, the use of the selector valve 11 coupled to different fluid paths allows for the selection of different modes of operation, thereby permitting the application or release of the friction pads 17 to/from the friction surface 18 of the braking arrangement 12. For example, the selector valve 11 may acquire a first mode wherein the friction pads 17 are applied against the friction surface 18 of the braking arrangement 12, and a second mode wherein the friction pads 17 are at least partially released from the friction surface 18 of the braking arrangement 12. In this example, the fluid lines in communication with the braking arrangement 12 are not pressurized in the first mode, but are pressurized in the second mode.

Furthermore, the selector valve 11 may acquire an intermediate mode for "dumping" pressure accumulated in the caliper pistons 20 of the braking arrangement 12. More specifically, the intermediate mode allows fluid communication between the pressurized caliper pistons 20 and the fluid reservoir 21 (of lower pressure) such that fluid will flow from the caliper pistons 20 to the fluid reservoir 21.

In addition, if the selector valve 11 is being operated in the hand pump mode, pressure lines in communication with the braking arrangement 12 will be pressurized. Thus, where prior systems would permit the possibility of transferring pressurized fluid to a different brake control (such as the HBCU 16), in this embodiment, the brake release device 10 requires that the selector valve 11 pass through an intermediate pressure dump mode prior to enabling the control of the brakes via the HBCU, as shown in Figures 2A to 4B. In the intermediate mode (pressure dump), the selector valve 11 permits fluid communication between the braking arrangement 12 and the fluid reservoir 21, thereby causing pressurized fluid to flow from the braking arrangement 12 to the fluid reservoir 21. As such, the caliper pistons 20 are relieved of pressurized fluid prior to being put into communication with the HBCU 16, thereby mitigating the risk of over-pressurizing and damaging the HBCU.

The brake system 9 may also employ the interlock 30 to control switching of the selector valve 11 from one mode to another. The interlock 30 has a piston 50 and cylinder 51 which is exposed to hydraulic fluid and hence is pressure responsive (as depicted by the connection of piston 50 to the fluid circuit). The interlock 30 also includes a detent 32 which acts as a physical stop to prevent the selector valve 11 from being accidentally placed in the wrong mode. The detent 32 can be any device which mechanically arrests the rotation of the selector valve 11. As will be described in detail below, the detent 32 is an extendable and retractable pin 40 which registers with locking mechanisms located on the selector valve 11. The pin 40 of the interlock 30 is also biased in the retracted position by a spring 33. Therefore, when the hydraulic pressure in the fluid circuit falls below a certain level, the spring 33 will cause the piston 50 to retract, hence disengaging the interlock 30. In some embodiments, the threshold at which the piston 50 will remain extended may be between, but not limited to, 0 and 200 bar.

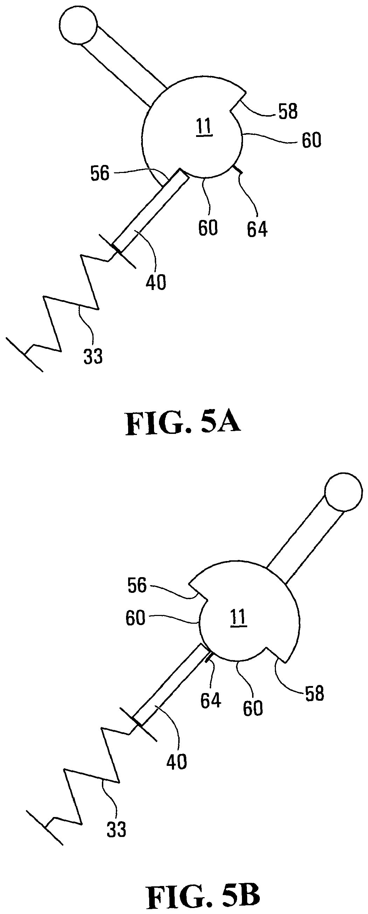

Figures 5A to 5D show different positions of the selector valve 11 in relation to the extendable pin 40. In this embodiment, the selector valve 11 has a first abutment surface 56, a second abutment surface 58, a sliding surface 60, and a stopper 64. The pin 40 abuts against the first abutment surface 56 and extends towards the sliding surface 60 when the fluid lines are pressurized in the hand pump mode. Similarly, the pin 40 abuts against the second abutment surface 58 and extends towards the sliding surface 60 when the fluid lines are pressurized in the HBCU mode. When the fluid lines are pressurized, the pin 40 will abut against the sliding surface 60 and induce a level of friction force between the pin 50 and the sliding surface 60. Although the level of friction could be overcome if a worker consciously chooses to rotate the selector valve 11, the friction force is sufficient to avoid undesired (and inadvertent) rotation of the selector valve 11. Thus, it can be understood that extension of the pin 40 via pressurization of the fluid lines (in either of the HBCU or hand pump modes) provides an added safety measure by ensuring that the selector valve 11 is not rotated to the pressure dump mode erroneously. In addition, abutment of the pin 40 against the stopper 64 causes the selector valve 11 to stop at the pressure dump mode when switching between the HBCU and hand pump modes as described below.

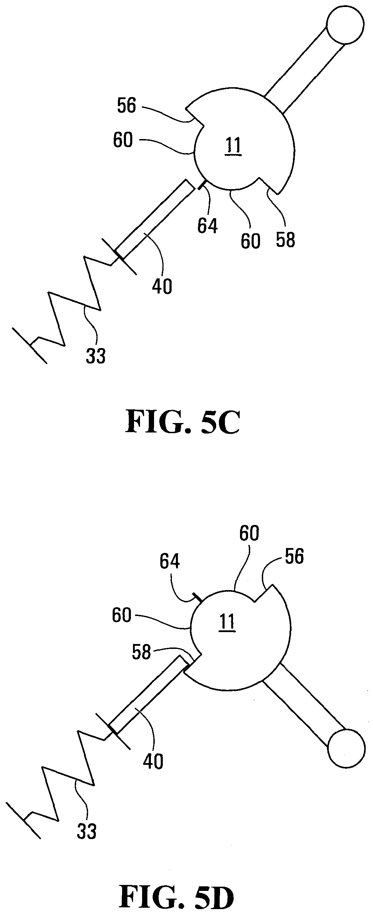

The interlock 30 operates as follows. Assuming that the selector valve 11 is in the hand pump mode and the hydraulic circuit is pressurized, the piston 50 is subjected to hydraulic pressure and moves outwardly in the cylinder 51. The detent 32 (in this case represented by pin 40) thus extends and abuts against the sliding surface 60, thereby inducing enough frictional force between the pin 40 and the sliding surface 60 to lock the selector valve 11 in hand pump mode (Figure 5A) and avoids inadvertent rotation of the selector valve 11. However, if a user desires switching out of the hand pump mode, the frictional force induced between the pin 40 and the sliding surface 60 can be overcome. In such a situation, the presence of abutment surface 56 renders rotation in only one direction possible (i.e. rotation in the direction towards HBCU mode). A user will therefore rotate the selector valve 11 towards the HBCU mode until the pin 40 abuts against stopper 64, thereby impeding further rotation of the selector valve 11. The system is now in pressure dump mode (Figure 5B) wherein pressure in the fluid lines is released. Thus, it can be noted that the stopper 64 forces the system to pass through the pressure dump mode when switching between the other (pressurized) modes. In this embodiment, the biasing force of the spring 33 is sufficient to retract the pin 40 enough to clear the stopper 64 only when the pressure in the fluid lines has dropped sufficiently (Figure 5C). Once the pin 40 has been retracted, the selector valve 11 can be rotated into the HBCU mode. Although the pin 40 is sufficiently retracted to overcome the stopper 64, the pin 40 is still capable of abutting against abutment surface 58, thereby avoiding that the selector valve 11 is over-rotated (Figure 5D).

The interlock 30 may therefore be actuated in either of the HBCU mode or the hand pump mode, for example, when maintenance to the braking arrangement 12 is being performed. It is common to operate the HBCU 16 via the maintenance facility's power supply in order to release the friction pads 17 from the friction surface 18 of the braking arrangement 12 and permit a worker to perform necessary maintenance. If an interlock 30 were not employed, it would be possible to rotate the selector valve 11 from the HBCU mode to the pressure dump mode. This could result in transferring pressurized fluid from the hydraulic lines into the fluid reservoir 21, thereby possibly causing overflow of the fluid reservoir 21 and damage to the brake system 9. In addition, when maintenance is being performed on the braking arrangement 12, accidental switching to the pressure dump mode would result in application of the friction pads 17 to the friction surface 18, thereby possibly injuring a maintenance worker. Thus, conditional actuation of the interlock 30 via a pressure threshold in either of hand brake mode or HBCU mode can present a greater level of safety.

In the embodiments discussed above, the interlock 30 can adopt a non-actuated position when the brake release device 10 is in the pressure dump mode. This is because as pressure is relieved from the fluid lines connected to the braking arrangement 12, there is generally no danger in freely switching to an operational mode which permits the pressurization of said fluid lines. However, various arrangements can also be contemplated wherein, for example, the interlock 30 may also be conditioned to adopt an actuated state in the pressure dump mode if desired.

It is to note that the brake system 9 described herein can be used in a variety of applications. For example, the brake system 9 can be used in any type of transportation system such as monorail, automotive or aerospace systems.

Although various embodiments have been illustrated, this was for the purpose of describing, but not limiting, the invention. Various modifications will become apparent to those skilled in the art and are within the scope of this invention, which is defined more particularly by the attached claims.

## Claims

1. A brake release device (10) for a braking arrangement, the braking arrangement including friction pads (17), a friction surface (18) and a first fluid path to convey fluid for controlling the application of the friction pads (17) against the friction surface (18), said brake release device (10) comprising:
a. a second fluid path to convey fluid for releasing the friction pads (17) from the friction surface (18); and
b. a selector valve (11) coupled with the first and second fluid paths and capable to selectively acquire :
i. a first mode for establishing fluid communication between the first fluid path and the braking arrangement (12);
ii. a second mode for establishing fluid communication between the second fluid path and the braking arrangement (12); and
iii. an intermediate mode, said selector valve (11) being movable from said first mode to said second mode via said intermediate mode in which pressurized fluid in the first fluid path is relieved before entering said second mode.

2. A brake release device as described in claim 1, further including a pump for pressurizing the second fluid path and causing the friction pads to release from the friction surface when in said second mode, wherein the pump is preferably manually operable.

3. A brake release device as described in claim 1, wherein the braking arrangement is capable of being in fluid communication with a fluid reservoir, said selector valve permitting fluid communication between the braking arrangement and the fluid reservoir when said selector valve is in said intermediate mode, thereby causing pressurized fluid to flow from the braking arrangement to the fluid reservoir.

4. A brake release device as described in claim 1, wherein the braking arrangement is capable of being in fluid communication with a fluid reservoir and wherein the second fluid path connects to a fluid pressure control mechanism, said selector valve preventing fluid communication between said fluid pressure control mechanism and the fluid reservoir when said selector valve is in said second mode.

5. A brake release device as described in claim 4, wherein said fluid pressure control mechanism is a hydraulic brake control unit.

6. A brake release device as described in claim 1, further including a fluid pressure control mechanism for pressurizing the second fluid path and causing the friction pads to release from the friction surface when in said second mode.

7. A brake release device as described in claim 6, wherein said fluid pressure control mechanism is a hydraulic brake control unit.

8. A brake release device (10) for a braking arrangement (12), the braking arrangement including friction pads (17), a friction surface (18) and a first fluid path to convey fluid for controlling the application of the friction pads (17) against the friction surface (18), said brake release device (10) comprising:
a. a second fluid path to convey fluid for releasing the friction pads (17) from the friction surface (18); and
b. a selector valve (11) coupled with the first and second fluid paths and capable to selectively acquire :
i. a first mode for establishing fluid communication between the first fluid path and the braking arrangement (12);
ii. a second mode for establishing fluid communication between the second fluid path and the braking arrangement (12); and
c. a pressure responsive interlock (30) which controls switching between said first mode and said second mode.

9. A brake release device as described in claim 8, wherein said pressure responsive interlock prevents switching from said second mode to said first mode when pressure in said second fluid path is above a threshold, wherein the threshold is preferably between 0 and 200 bar.

10. A brake release device as described in claim 8, wherein said pressure responsive interlock permits the switching from said first mode to said second mode when said selector valve is in said first mode.

11. A brake release device as described in claim 8, wherein said pressure responsive interlock comprises a detent.

12. A brake release device (10) for a braking arrangement (12), the braking arrangement (12) including friction pads (17) and a friction surface (18), said brake release device (10) comprising:
a. a first fluid path and a second fluid path to convey fluid for releasing the friction pads (17) from the friction surface (18);
b. a third fluid path to convey fluid for applying the friction pads (17) to the friction surface (18); and
c. a selector valve (11) coupled with the first, second and third fluid paths and capable to selectively acquire :
i. a first mode for establishing fluid communication between the first fluid path and the braking arrangement (12);
ii. a second mode for establishing fluid communication between the second fluid path and the braking arrangement (12); and
iii. an intermediate mode for establishing fluid communication between the third fluid path and the braking arrangement (12),
d. wherein pressure in the third fluid path is relieved before entering either of said first or second modes.

13. A brake release device as described in claim 12, further comprising a pump for pressurizing the first fluid path and a fluid pressure control mechanism for pressurizing the second fluid path, each of said pump and said fluid pressure control mechanism capable of causing the friction pads to release from the friction surface when in either of said first or second mode.

14. A brake release device as described in claim 13, wherein the braking arrangement is capable of being in fluid communication with a fluid reservoir.

15. A brake release device as described in claim 14, wherein said selector valve prevents fluid communication between said reservoir and said fluid pressure control mechanism when said selector valve is in said second mode.

## Patentansprüche

1. Bremsauslösevorrichtung (10) für eine Bremsanordnung, wobei die Bremsanordnung Bremsbeläge (17), eine Reibfläche (18) und einen ersten Fluidweg zum Fördern von Fluid zur Steuerung des Andrückens der Bremsbeläge (17) an die Reibfläche (18) beinhaltet, wobei die genannte Bremsauslösevorrichtung aufweist:
a. einen zweiten Fluidweg zum Fördern von Fluid zum Lösen der Bremsbeläge (17) von der Reibfläche (18), und
b. ein Wahlventil (11), das mit dem ersten und zweiten Fluidweg gekoppelt ist und wahlweise Folgendes annehmen kann:
i. einen ersten Modus zum Herstellen einer Fluidverbindung zwischen dem ersten Fluidweg und der Bremsanordnung (12),
ii. einen zweiten Modus zum Herstellen einer Fluidverbindung zwischen dem zweiten Fluidweg und der Bremsanordnung (12) und
iii. einen Zwischenmodus, wobei das genannte Wahlventil (11) von dem genannten ersten Modus über den genannten Zwischenmodus in den genannten zweiten Modus bewegbar ist, wobei in dem Zwischenmodus vor dem Eintritt in den genannten zweiten Modus druckbeaufschlagtes Fluid im ersten Fluidweg druckentlastet wird.

2. Bremsauslösevorrichtung nach Anspruch 1, die ferner eine Pumpe aufweist zur Druckbeaufschlagung des zweiten Fluidwegs und zum Veranlassen, dass die Bremsbeläge von der Reibfläche gelöst werden, wenn im genannten zweiten Modus, wobei die Pumpe vorzugsweise von Hand bedienbar ist.

3. Bremsauslösevorrichtung nach Anspruch 1, wobei die Bremsanordnung in Fluidverbindung mit einem Fluidvorratsbehälter sein kann, wobei das genannte Wahlventil eine Fluidverbindung zwischen der Bremsanordnung und dem Fluidvorratsbehälter zulässt, wenn das genannte Wahlventil in dem genannten Zwischenmodus ist, wodurch veranlasst wird, dass druckbeaufschlagtes Fluid von der Bremsanordnung zum Fluidvorratsbehälter fließt.

4. Bremsauslösevorrichtung nach Anspruch 1, wobei die Bremsanordnung in Fluidverbindung mit einem Fluidvorratsbehälter sein kann und wobei der zweite Fluidweg mit einem Fluiddrucksteuermechanismus verbunden ist, das genannte Wahlventil dabei eine Fluidverbindung zwischen dem genannten Fluiddrucksteuermechanismus und dem Fluidvorratsbehälter verhindert, wenn das genannte Wahlventil im genannten zweiten Modus ist.

5. Bremsauslösevorrichtung nach Anspruch 4, wobei der genannte Fluiddrucksteuermechanismus eine Hydraulikbremsensteuereinheit ist.

6. Bremsauslösevorrichtung nach Anspruch 1, die ferner einen Fluiddrucksteuermechanismus aufweist zur Druckbeaufschlagung des zweiten Fluidwegs und zum Veranlassen, dass die Bremsbeläge von der Reibfläche gelöst werden, wenn im genannten zweiten Modus.

7. Bremsauslösevorrichtung nach Anspruch 6, wobei der genannte Fluiddrucksteuermechanismus eine Hydraulikbremsensteuereinheit ist.

8. Bremsauslösevorrichtung (10) für eine Bremsanordnung (12), wobei die Bremsanordnung Bremsbeläge (17), eine Reibfläche (18) und einen ersten Fluidweg zum Fördern von Fluid zur Steuerung des Andrückens der Bremsbeläge (17) an die Reibfläche (18) beinhaltet, wobei die genannte Bremsauslösevorrichtung (10) aufweist:
a. einen zweiten Fluidweg zum Fördern von Fluid zum Lösen der Bremsbeläge (17) von der Reibfläche (18) und
b. ein Wahlventil (11), das mit dem ersten und zweiten Fluidweg gekoppelt ist und wahlweise Folgendes annehmen kann:
i. einen ersten Modus zum Herstellen einer Fluidverbindung zwischen dem ersten Fluidweg und der Bremsanordnung (12),
ii. einen zweiten Modus zum Herstellen einer Fluidverbindung zwischen dem zweiten Fluidweg und der Bremsanordnung (12), und
c. eine auf Druck ansprechende Verriegelung (30), die das Umschalten zwischen dem genannten ersten Modus und dem genannten zweiten Modus steuert.

9. Bremsauslösevorrichtung nach Anspruch 8, wobei die genannte auf Druck ansprechende Verriegelung das Umschalten von dem genannten zweiten Modus in den genannten ersten Modus verhindert, wenn Druck im genannten zweiten Fluidweg über einem Schwellenwert ist, wobei der Schwellenwert vorzugsweise zwischen 0 und 200 bar ist.

10. Bremsauslösevorrichtung nach Anspruch 8, wobei die genannte auf Druck ansprechende Verriegelung das Umschalten von dem genannten ersten Modus in den genannten zweiten Modus zulässt, wenn das genannte Wahlventil im genannten ersten Modus ist.

11. Bremsauslösevorrichtung nach Anspruch 8, wobei die genannte auf Druck ansprechende Verriegelung eine Arretierung aufweist.

12. Bremsauslösevorrichtung (10) für eine Bremsanordnung (12), wobei die Bremsanordnung (12) Bremsbeläge (17) und eine Reibfläche (18) beinhaltet, wobei die genannte Bremsauslösevorrichtung (10) aufweist:
a. einen ersten Fluidweg und einen zweiten Fluidweg zum Fördern von Fluid zum Lösen der Bremsbeläge (17) von der Reibfläche (18),
b. einen dritten Fluidweg zum Fördern von Fluid zum Andrücken der Bremsbeläge (17) an die Reibfläche (18) und
c. ein Wahlventil (11), das mit dem ersten, zweiten und dritten Fluidweg gekoppelt ist und wahlweise Folgendes annehmen kann:
i. einen ersten Modus zum Herstellen einer Fluidverbindung zwischen dem ersten Fluidweg und der Bremsanordnung (12),
ii. einen zweiten Modus zum Herstellen einer Fluidverbindung zwischen dem zweiten Fluidweg und der Bremsanordnung (12) und
iii. einen Zwischenmodus zum Herstellen einer Fluidverbindung zwischen dem dritten Fluidweg und der Bremsanordnung (12),
d. wobei Druck im dritten Fluidweg vor dem Eintritt in den genannten ersten oder zweiten Modus abgebaut wird.

13. Bremsauslösevorrichtung nach Anspruch 12, die ferner eine Pumpe zur Druckbeaufschlagung des ersten Fluidwegs und einen Fluiddrucksteuermechanismus zur Druckbeaufschlagung des zweiten Fluidwegs aufweist, wobei die genannte Pumpe und der genannte Fluiddrucksteuermechanismus jeweils veranlassen können, dass die Bremsflächen von der Reibfläche gelöst werden, wenn in dem genannten ersten oder zweiten Modus.

14. Bremsauslösevorrichtung nach Anspruch 13, wobei die Bremsanordnung mit einem Fluidvorratsbehälter in Fluidverbindung sein kann.

15. Bremsauslösevorrichtung nach Anspruch 14, wobei das genannte Wahlventil eine Fluidverbindung zwischen dem genannten Vorratsbehälter und dem genannten Fluiddrucksteuermechanismus verhindert, wenn das genannte Wahlventil in dem genannten zweiten Modus ist.

## Revendications

1. Dispositif de relâchement de frein (10) pour un agencement de freinage, l'agencement de freinage incluant des patins de friction (17), une surface de friction (18) et une première voie de fluide pour transporter du fluide afin de contrôler l'application des patins de friction (17) contre la surface de friction (18), ledit dispositif de relâchement de frein (10) comprenant :
a. une deuxième voie de fluide pour transporter du fluide afin de relâcher les patins de friction (17) de la surface de friction (18) ; et
b. une valve de sélection (11) couplée aux première et deuxième voies de fluide et apte à acquérir sélectivement :
i. un premier mode d'établissement de communication fluidique entre la première voie de fluide et l'agencement de freinage (12) ;
ii. un second mode d'établissement de communication fluidique entre la deuxième voie de fluide et l'agencement de freinage (12) ; et
iii. un mode intermédiaire, ladite valve de sélection (11) étant mobile dudit premier mode audit second mode via ledit mode intermédiaire, dans lequel du fluide pressurisé dans la première voie de fluide est déchargé avant d'entrer dans ledit second mode.

2. Dispositif de relâchement de frein selon la revendication 1, incluant en outre une pompe pour pressuriser la deuxième voie de fluide et amener les patins de frictionàse relâcher de la surface de friction dans ledit second mode, dans lequel la pompe est de préférence actionnable manuellement.

3. Dispositif de relâchement de frein selon la revendication 1, dans lequel l'agencement de freinage est apte à être en communication fluidique avec un réservoir de fluide, ladite valve de sélection permettant la communication fluidique entre l'agencement de freinage et le réservoir de fluide lorsque ladite valve de sélection est dans ledit mode intermédiaire, amenant ainsi du fluide pressurisé à s'écouler de l'agencement de freinage au réservoir de fluide.

4. Dispositif de relâchement de frein selon la revendication 1, dans lequel l'agencement de freinage est apte à être en communication fluidique avec un réservoir de fluide et dans lequel la deuxième voie de fluide est reliée à un mécanisme de contrôle de pression de fluide, ladite valve de sélection empêchant la communication fluidique entre ledit mécanisme de contrôle de pression de fluide et le réservoir de fluide lorsque ladite valve de sélection est dans ledit second mode.

5. Dispositif de relâchement de frein selon la revendication 4, dans lequel ledit mécanisme de contrôle de pression de fluide est une unité de contrôle de frein hydraulique.

6. Dispositif de relâchement de frein selon la revendication 1, incluant en outre un mécanisme de contrôle de pression de fluide pour pressuriser la deuxième voie de fluide et amener les patins de frictionà se relâcher de la surface de friction dans ledit second mode.

7. Dispositif de relâchement de frein selon la revendication 6, dans lequel ledit mécanisme de contrôle de pression fluidique est une unité de contrôle de frein hydraulique.

8. Dispositif de relâchement de frein (10) pour un agencement de freinage (12), l'agencement de freinage incluant des patins de friction (17), une surface de friction (18) et une première voie de fluide pour transporter du fluide afin de contrôler l'application des patins de friction (17) contre la surface de friction (18), ledit dispositif de libération de frein (10) comprenant :
a. unedeuxième voie de fluide pour transporter du fluide afin derelâcher les patins de friction (17) de la surface de friction (18) ; et
b. une valve de sélection (11) couplée aux première et deuxième voies de fluide et apte à acquérir sélectivement :
i. un premier mode d'établissement de la communication fluidique entre la première voie de fluide et l'agencement de freinage (12) ;
ii. un second mode d'établissement de la communication fluidique entre la deuxième voie de fluide et l'agencement de freinage (12) ; et
c. un verrouillage (30) réactif à la pression qui contrôle la commutation entre ledit premier mode et ledit second mode.

9. Dispositif de relâchement de frein selon la revendication 8, dans lequel ledit verrouillage réactif à la pression empêche la commutation dudit second mode audit premier mode lorsque la pression dans ladite deuxième voie de fluide est supérieure à un seuil, dans lequel le seuil est de préférence entre 0 et 200 bars.

10. Dispositif de relâchement de frein selon la revendication 8, dans lequel ledit verrouillage réactif à la pression permet la commutation dudit premier mode audit second mode lorsque ladite valve de sélection est dans ledit premier mode.

11. Dispositif de relâchement de frein selon la revendication 8, dans lequel ledit verrouillage réactif à la pression comprend une butée.

12. Dispositif de relâchement de frein (10) pour un agencement de freinage (12), l'agencement de freinage (12) incluant des patins de friction (17) et une surface de friction (18), ledit dispositif de relâchement de frein (10) comprenant :
a. une première voie de fluide et une deuxième voiede fluide pour transporter du fluide afin derelâcher les patins de friction (17) de la surface de friction (18) ;
b. une troisième voie de fluide pour transporter du fluide afin d'appliquer les patins de friction (17) contre la surface de friction (18) ; et
c. une valve de sélection (11) couplée à la première, deuxième et troisième voies de fluide et apte à acquérir sélectivement :
i. un premiermode d'établissement d'une communication fluidique entre la première voie de fluide et l'agencement de freinage (12) ;
ii. un second mode d'établissement d'une communication fluidique entre la deuxième voiede fluide et l'agencement de freinage (12) ; et
iii. un mode intermédiaire pour établir une communication fluidique entre la troisième voie de fluide et l'agencement de freinage (12),
d. dans lequel la pression dans la troisième voie de fluide est déchargée avant d'entrer dans l'un dudit premier ou second mode.

13. Dispositif de relâchement de frein selon la revendication 12, comprenant en outre une pompe pour pressuriser la première voie de fluide et un mécanisme de contrôle de pression de fluide pour pressuriser la deuxième voie de fluide, chacun de ladite pompe et dudit mécanisme de contrôle de pression de fluide étant apte à amener les patins de friction à se relâcher de la surface de friction dans l'un ou l'autre dudit premier ou second mode.

14. Dispositif de relâchement de frein selon la revendication 13, dans lequel l'agencement de freinage est apte à être en communication fluidique avec un réservoir de fluide.

15. Dispositif de relâchement de frein selon la revendication 14, dans lequel ladite valve de sélection empêche la communication fluidique entre ledit réservoir et ledit mécanisme de contrôle de pression de fluide lorsque ladite valve de sélection est dans ledit second mode.
